(19) Europäisches Patentamt
European Patent Office
Office européen des brevets

(11) **EP 4 451 028 A1**

(12) **EUROPEAN PATENT APPLICATION**
published in accordance with Art. 153(4) EPC

(43) Date of publication:
**23.10.2024 Bulletin 2024/43**

(51) International Patent Classification (IPC):
**G02B 6/44** *(2006.01)*     **G02B 6/02** *(2006.01)*

(21) Application number: **22907534.6**

(52) Cooperative Patent Classification (CPC):
**G02B 6/02; G02B 6/44**

(22) Date of filing: **16.12.2022**

(86) International application number:
**PCT/JP2022/046393**

(87) International publication number:
**WO 2023/113012 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.12.2021 JP 2021205002**

(71) Applicant: **SUMITOMO ELECTRIC INDUSTRIES,
LTD.
Osaka-shi, Osaka 541-0041 (JP)**

(72) Inventors:
• **SATO Fumiaki**
**Osaka-shi, Osaka 541-0041 (JP)**
• **NAKAYAMA Shuhei**
**Osaka-shi, Osaka 541-0041 (JP)**
• **SHIMODA Yuuki**
**Osaka-shi, Osaka 541-0041 (JP)**
• **NAKANISHI Tetsuya**
**Osaka-shi, Osaka 541-0041 (JP)**
• **HAYASHI Tetsuya**
**Osaka-shi, Osaka 541-0041 (JP)**

(74) Representative: **Müller-Boré & Partner
Patentanwälte PartG mbB
Friedenheimer Brücke 21
80639 München (DE)**

(54) **OPTICAL FIBER CABLE**

(57)     An optical fiber cable (2) comprises a plurality of coated optical fibers (21), and an outer sheath (23) that covers the plurality of coated optical fibers (21) from the outer sides thereof. Each of the plurality of coated optical fibers (21) is a multicore fiber having a plurality of cores, and the glass diameter of each of the plurality of coated optical fibers (21) is larger than 125 $\mu$m, and the core density is 11 cores /mm2 or more.

FIG. 1

EP 4 451 028 A1

**Description**

TECHNICAL FIELD

The present disclosure relates to an optical fiber cable.
The present application claims priority based on Japanese Patent Application No. 2021-205002 filed on December 17, 2021, and incorporates all the contents described in the Japanese Application.

BACKGROUND ART

In the related art, as an optical fiber cable, there is a slot type cable in which a plurality of optical fibers are accommodated in a slot rod and covered with a sheath. There is also a slotless type cable in which the slot rod is omitted and a plurality of optical fibers are mounted in a cable sheath at a high density. As the optical fiber mounted in these cables, a single-core fiber including one core and a multi-core fiber including a plurality of cores are known (for example, Patent Literature 1).

CITATION LIST

PATENT LITERATURE

Patent Literature 1: JP2015-052704A

SUMMARY OF INVENTION

An optical fiber cable including:

a plurality of optical fibers; and
a sheath covering the plurality of optical fibers from an outside,
in which each of the plurality of optical fibers is a multi-core fiber including a plurality of cores,
in which a glass diameter of each of the plurality of optical fibers is larger than 125 $\mu$m, and
in which a core density is 11 core/mm$^2$ or more

BRIEF DESCRIPTION OF DRAWINGS

[FIG. 1] FIG. 1 is a cross-sectional view of an optical fiber cable according to the present embodiment.
[FIG. 2] FIG. 2 is a partially exploded view showing an optical fiber ribbon provided in the optical fiber cable in FIG. 1 in the longitudinal direction.
[FIG. 3] FIG. 3 is a cross-sectional view of an optical fiber provided in the optical fiber ribbon in FIG. 2.
[FIG. 4] FIG. 4 is a cross-sectional view of an optical fiber cable according to a modification.

DESCRIPTION OF EMBODIMENTS

[TECHNICAL PROBLEM]

Since the slot type cable includes the slot rod, it is difficult to mount the optical fibers at a high density. In the slotless type cable, there is also a limit to increasing the density of the optical fibers with the currently commonly used optical fibers having a glass diameter of 125 $\mu$m and a core wire diameter of 250 $\mu$m.

The present disclosure provides an optical fiber cable having a high core density. (SOLUTION TO PROBLEM)

(DESCRIPTIONS OF EMBODIMENTS)

First, an embodiment of the present disclosure will be listed and described.

(1) An optical fiber cable according to an aspect of the present disclosure including:

a plurality of optical fibers; and
a sheath covering the plurality of optical fibers from an outside,
in which each of the plurality of optical fibers is a multi-core fiber including a plurality of cores,
in which a glass diameter of each of the plurality of optical fibers is larger than 125 $\mu$m, and
in which a core density is 11 core/mm$^2$ or more.

According to the present disclosure, the glass diameter of each of the optical fibers is larger than 125 $\mu$m. Therefore, the number of cores per optical fiber can be increased, and the core density (the density of cores) can be increased to 11 core/mm$^2$ or more. Therefore, it is possible to implement an optical fiber cable in which the cores of the optical fiber are mounted at a higher density.

(2) In the above (1), bending rigidity of each of the plurality of optical fibers may be 0.25 N·mm$^2$ or more.

Generally, In a case where an optical fiber cable is provided in a duct by the pneumatic feeding, when the bending rigidity of the optical fiber cable is low, the cable may meander. In an environment of -30°C or -40°C, the sheath contracts, and the macro bending of the optical fiber may occur within the sheath. According to the present disclosure, since the bending rigidity of each of the optical fibers is 0.25 N·mm$^2$ or more, the bending rigidity of the optical fiber cable also becomes high, and the optical fiber cable is less likely to meander during the pneumatic feeding. The macro bending is also less likely to occur in a low temperature environment.

(3) In the above (1) or (2), a tensile strength of the optical fiber cable may be 1300 N or more.

According to the present disclosure, the tensile strength of the optical fiber cable is 1300 N or more. Therefore, it is possible to implement an optical fiber cable that can withstand general pneumatic feeding.

(4) In any one of the above (1) to (3), a glass diameter of each of the plurality of optical fibers may be 175 $\mu$m or more and 185 $\mu$m or less.

According to the present disclosure, since the glass diameters of the plurality of optical fibers are 175 $\mu$m or more and 185 $\mu$m or less, the bending rigidity of each of the optical fibers is higher than that of the optical fiber having a glass diameter of 125 $\mu$m. Therefore, the optical fiber cable is less likely to meander during the pneumatic feeding, and the macro bending is also less likely to occur in the low temperature environment. Since a wide interval between the cores can be secured, the leakage (the crosstalk) of an optical signal between the cores can be prevented.

(5) In any one of the above (1) to (4), each of the plurality of optical fibers may include 12 cores.

According to the present disclosure, since each of the optical fibers includes 12 cores, the core density can be further increased as compared with the optical fiber including a related-art number of cores.

(6) In any one of the above (1) to (5), the plurality of optical fibers may be an intermittent coupling type optical fiber ribbon in which, in a state where the plurality of optical fibers are arranged in parallel in a direction orthogonal to a longitudinal direction of the plurality of optical fibers, a coupling portion that has a state where adjacent optical fibers of some or all of the plurality of optical fibers are coupled, and a non-coupling portion that has a state where the adjacent optical fibers are not coupled are intermittently provided in the longitudinal direction.

The intermittent coupling type optical fiber ribbon may be used as the plurality of optical fibers. By using the intermittent coupling type optical fiber ribbon, it is possible to mount the optical fibers in the optical fiber cable at a higher density.

[ADVANTAGEOUS EFFECTS OF INVENTION]

According to the present disclosure, it is possible to provide an optical fiber cable having a high core density.

(Details of Embodiment of Present Disclosure)

A specific example of an optical fiber cable according to an embodiment of the present disclosure will be described with reference to the drawings.

It should be noted that the present disclosure is not limited to these examples, but is indicated by claims, and is intended to include all changes within the meaning and scope equivalent to the claims.

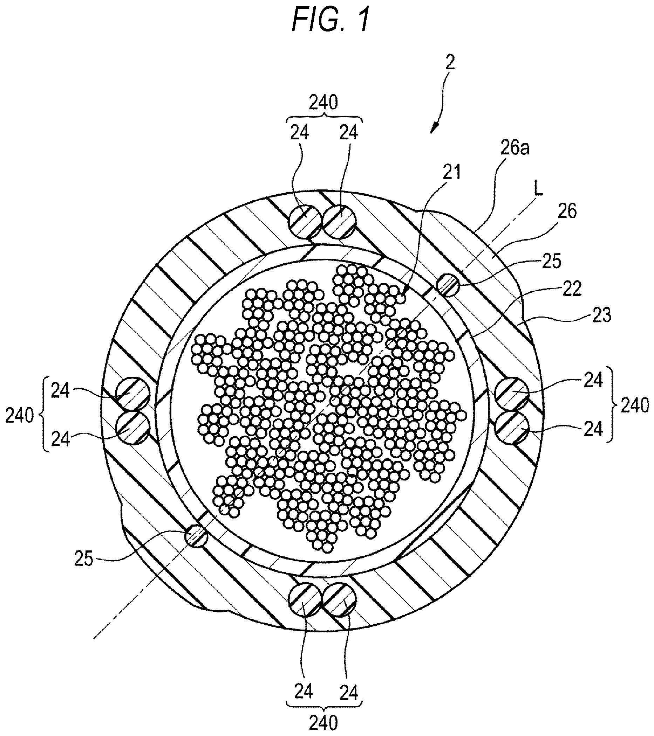

FIG. 1 is a cross-sectional view of an optical fiber cable 2 according to an embodiment of the present disclosure. As shown in FIG. 1, the optical fiber cable 2 includes a plurality of optical fibers that are in the form of a plurality of optical fiber ribbons 21, a water absorption tape 22 for example, a cable sheath 23 (a sheath), at least one tensile strength member 24, at least one tear string 25, and a plurality of protrusions 26 for example. The cable outer diameter of the optical fiber cable 2 is, for example, 20 mm. The tensile strength of the optical fiber cable 2 is 1300 N or more.

The water absorption tape 22 is longitudinally or spirally wrapped around the whole of the plurality of optical fiber ribbons 21, for example. The water absorption tape 22 is, for example, a tape subjected to water absorption processing by applying a water absorption powder to a base fabric made of polyester or the like. The thickness of the water absorption tape 22 is, for example, 0.3 mm. In the present embodiment, the optical fiber cable 2 includes the water absorption tape 22. Alternatively, the optical fiber cable 2 may not include the water absorption tape 22.

The cable sheath 23 covers the periphery of the water absorption tape 22. In other words, the cable sheath 23 covers the plurality of optical fiber ribbons 21 from the outside. The cable sheath 23 accommodates the plurality of optical fiber ribbons 21 (the plurality of optical fibers). A plurality of the tensile strength members 24 are embedded in the layer of the cable sheath 23. The thickness of the cable sheath 23 is, for example, 1.5 mm. The cable sheath 23 is made of, for example, a flame-retardant material. Examples of the flame-retardant material include a vinyl resin such as polyvinyl chloride (PVC) containing a flame-retardant inorganic material such as magnesium hydroxide or aluminum hydroxide, and a polyolefin resin such as polyethylene (PE). The cable sheath 23 may contain a release agent. Examples of the release agent include silicon-based release agents such as silicon and siloxane.

The tensile strength members 24 are arranged in the longitudinal direction of the optical fiber cable 2 along the plurality of optical fiber ribbons 21. The diameter of the tensile strength member 24 is, for example, 0.5 mm. The tensile strength member 24 is made of fiber reinforced plastic (FRP) such as aramid FRP, glass FRP, or carbon FRP. The tensile strength member 24 may be made of a liquid crystal polymer. The tensile strength member 24 is preferably non-inductive. The fiber-reinforced plastic (FRP) is generally a combustible material. From the viewpoint of improving the flame retardance of the entire optical fiber cable 2, the tensile strength member 24 is preferably provided not near the surface layer of the cable sheath 23 but near the center of the optical fiber cable 2, inside the cable sheath 23.

The tensile strength member 24 has a circular cross section in the radial direction. In the present embodiment, eight tensile strength members 24 are embedded in the layer of the cable sheath 23. The eight tensile strength members 24 form pairs of two tensile strength members. In the following description, the paired two tensile strength members 24 are collectively referred to as a tensile strength member set 240.

In the present embodiment, the four tensile strength member sets 240 are separated from each other and embedded in the layer of the cable sheath 23. In the optical fiber cable 2, the four tensile strength member sets 240 are spaced apart from each other at equal intervals. Specifically, the tensile strength member sets 240 are provided, one by one, at positions facing each other across the center of the optical fiber cable 2, in the cross section of the optical fiber cable 2 in the radial direction. In the cross section of the optical fiber cable 2 in the radial direction, the tensile strength member sets 240 are provided such that a straight line connecting two tensile strength member sets 240 facing each other and another straight line connecting the other two tensile strength member sets 240 facing each other are orthogonal to each other.

The tear strings 25 are provided to tear the cable sheath 23. The tear strings 25 are arranged along the plurality of optical fiber ribbons 21 in the longitudinal direction of the optical fiber cable 2, in the layer of the cable sheath 23. In the present embodiment, two tear strings 25 are provided. Each of the tear strings 25 is located substantially in the middle of the adjacent tensile strength member sets 240. The two tear strings 25 face each other. The four tensile strength member sets 240 are arranged line-symmetrically with respect to a straight line L connecting centers of the tear strings 25 and the optical fiber cable 2, in the cable cross-sectional view. The operator can tear the cable sheath 23 in the longitudinal direction by pulling out the tear string 25 and take out the optical fiber ribbon 21. The tear string 25 has a fiber shape, and is made of, for example, a plastic material (for example, polyester) resistant to tension.

A plurality of (two in the present embodiment) protrusions 26 are provided. The two protrusions 26 are provided along the longitudinal direction of the optical fiber cable 2. The protrusions 26 may be provided continuously along the longitudinal direction, or may be provided intermittently. Further, the two protrusions 26 are provided to, for example, facing each other across the center of the optical fiber cable 2 in the circumferential direction of the outer peripheral portion of the cable sheath 23, in the cross section of the optical fiber cable 2 in the radial direction. In the present embodiment, the protrusion 26 is provided on the straight line L connecting the centers of the tear strings 25 and the optical fiber cable 2. The protrusion 26 is formed on the outer peripheral portion of the cable sheath 23 in the state of protruding in the radial direction of the optical fiber cable 2. The protrusion 26 has a curved surface 26a in a protruding direction thereof. The protrusion 26 is formed integrally with the cable sheath 23 by extrusion molding. In the present embodiment, the optical fiber cable 2 includes the two protrusions 26. Alternatively, the optical fiber cable 2 may not include the protrusion 26.

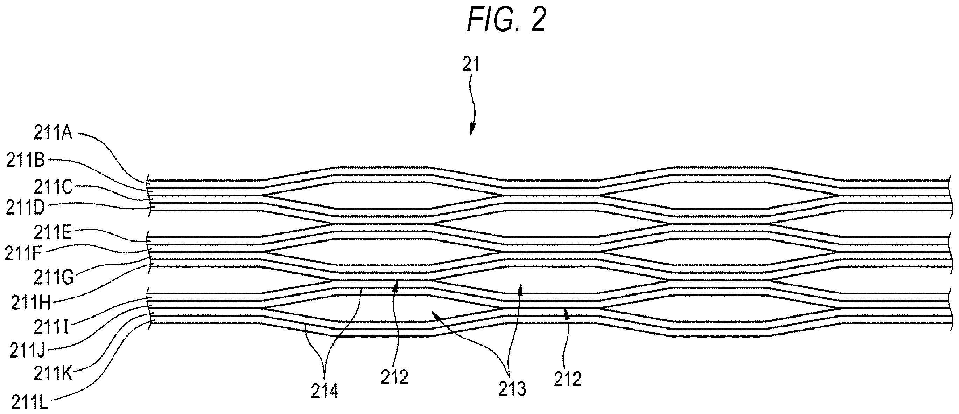

Next, the optical fiber ribbon 21 will be described in detail with reference to FIG. 2. FIG. 2 is a partially exploded view showing the optical fiber ribbon 21 in the longitudinal direction. As shown in FIG. 2, the optical fiber ribbon 21 is an intermittent coupling type optical fiber ribbon. In the optical fiber ribbon 21, in the state where a plurality of optical fibers 211A to 211L are arranged in parallel in a direction orthogonal to the longitudinal direction of the plurality of optical fibers 211A to 211L, a coupling portion 212 in which adjacent optical fibers of some or all of the plurality of optical fibers 211A to 211L are coupled, and a non-coupling portion 213 in which the adjacent optical fibers are not coupled are intermittently provided in the longitudinal direction. The bending rigidity of each of the optical fibers 211A to 211L is 0.25 N·mm$^2$ or more.

In the optical fiber ribbon 21 according to the present embodiment, the 12 optical fibers 211A to 211L are arranged in parallel. The portion where the coupling portion 212 and the non-coupling portion 213 are intermittently provided may be between a part of the optical fibers (intermittently every two cores), or may be between all the optical fibers (intermittently every one core). The optical fiber ribbon 21 shown in FIG. 2 is intermittent every two cores, and the non-coupling portion 213 is not provided between the optical fibers 211A and 211B, 211C and 211D, 211E and 211F, 211G and 211H, 211I and 211J, and 211K and 211L.

The coupling portion 212 in the optical fiber ribbon 21 is formed by applying a coupling resin 214 made of, for example, an ultraviolet curable resin or a thermosetting resin between the optical fibers. By applying the coupling resin 214 between predetermined optical fibers, the coupling portion 212 and the non-coupling portion 213 are intermittently provided, and the optical fibers 211A to 211L are integrated in parallel. The coupling resin 214 may be applied only to one surface of parallel surfaces formed by the parallel optical fibers 211A to 211L, or may be applied to both surfaces. The optical fiber ribbon 21 may be manufactured such that, for example, a tape resin is applied to one surface or both surfaces of the optical fibers 211A to 211L, which are arranged in parallel, to couple all the optical fibers 211A to 211L to each other, and then a part of the optical fibers 211A to 211L is cleaved by a rotary blade or the like to form the non-coupling portion 213.

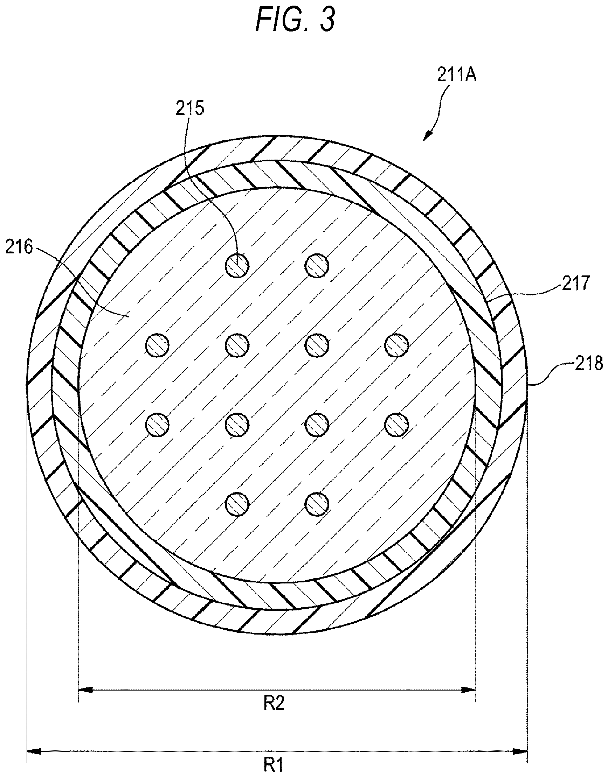

Next, the optical fiber 211A will be described with reference to FIG. 3. The configurations of the optical fibers 211B to 211L other than the optical fiber 211A are the same as that of the optical fiber 211A. FIG. 3 is a cross-sectional view of the optical fiber 211A. As shown in FIG. 3, the optical fiber 211A includes 12 cores 215, a cladding portion 216, and two coating layers 217 and 218. That is, the optical fiber 211A is a multi-core fiber including a plurality of cores 215. An outer diameter R1 of the optical fiber 211A is, for example, 250 μm ± 15 μm.

The core 215 is circular, in the cross section in the radial direction. The core 215 is made of quartz glass and contains an additive to increase the refractive index. The refractive index of the core 215 is higher than the refractive index of the cladding portion 216. The outer diameter of the core 215 is, for example, 5 μm or more and 10 μm or less.

The cladding portion 216 integrally surrounds the 12 cores 215. The cladding portion 216 is made of silica glass, for example pure silica glass. The cladding portion 216 is circular, in the cross section in the radial direction. An outer diameter (a glass diameter) R2 of the cladding portion 216 is, for example, 175 μm or more and 185 μm or less, and is larger than the glass diameter of a general optical fiber.

Both of the two coating layers 217 and 218 cover the periphery of the cladding portion 216. The total coating thickness of the coating layers 217 and 218 is, for example, 37.5 μm. The inner coating layer 217 of the two coating layers is made of a cured product of a primary resin. The outer coating layer 218 of the two coating layers is made of a cured product of a secondary resin.

In the primary resin of the inner coating layer 217 that is in contact with the cladding portion 216, a soft resin with a relatively low Young's modulus is used as a buffer layer. In the secondary resin of the outer coating layer 218 that is in contact with the inner coating layer 217, a hard resin with a relatively high Young's modulus is used as a protective layer. The Young's modulus of the cured product of the secondary resin is, at the room temperature (for example, 23°C), 900 MPa or more, preferably 1000 MPa or more, and more preferably 1500 MPa or more.

The secondary resin of the outer coating layer 218 is preferably a resin composition containing a base resin containing a urethane acrylate oligomer or urethane methacrylate oligomer, a monomer having a phenoxy group, a photopolymerization initiator and a silane coupling agent, and containing hydrophobic inorganic oxide particles. The content of inorganic oxide particles in the resin composition is 1% by mass or more and 45% by mass or less based on the total amount of the resin composition.

Each of the optical fibers 211A to 211L includes, for example, the 12 cores 215, and in the optical fiber cable 2, for example, 24 such 12-core intermittently coupled optical fiber ribbons 21 are arranged. Therefore, the optical fiber cable 2 according to the present embodiment has a total of 3456 cores 215. The outer diameter of the optical fiber cable 2 according to the present embodiment is, for example, 20 mm, and the core density, which is the density of cores in the entire cross section of the optical fiber cable 2, is 11 core/mm$^2$ or more.

The core density is a value obtained by dividing the total number of the cores 215 of the plurality of optical fibers accommodated in the optical fiber cable 2 by the cable cross-sectional area (the cross-sectional area obtained based on the outer diameter of the optical fiber cable 2).

Next, the bending rigidity of the optical fiber 211A will be described. The bending rigidity of the optical fibers 211B to 211L other than the optical fiber 211A is the same as the bending rigidity of the optical fiber 211A.

In the material mechanics, the bending rigidity of a general round bar is obtained according to the following Formula 1. In Formula 1, EI is the bending rigidity (N·mm$^2$), E is the Young's modulus (N/mm$^2$), and d is the radius (mm) of the round bar.

$$[\text{Formula 1}]$$

$$EI = E \cdot \pi \cdot d^4/64$$

Here, the optical fiber 211A is regarded as a composite of a glass portion including the core 215 and the cladding portion 216, the primary resin of the inner coating layer 217, and the secondary resin of the outer coating layer 218. The bending rigidity of the optical fiber 211A serving as the composite is obtained by the following Formula 2. In the following formula, $EI_{TOTAL}$ is the bending rigidity (N·mm$^2$) of the optical fiber 211A, E1 is the Young's modulus (N/mm$^2$) of the glass portion, E2 is the Young's modulus (N/mm$^2$) of the primary resin, and E3 is the Young's modulus (N/mm$^2$) of the secondary resin. D1 is the radius (mm) of the glass portion, D2 is the radius (mm) of the glass portion covered with the primary resin, and D3 is the radius (mm) of the glass portion covered with the primary resin and the secondary resin.

[Formula 2]

$$EI_{TOTAL} = E1 \cdot \pi \cdot D1^4/64 + E2 \cdot \pi \cdot (D2 - D1)^4/64 + E3 \cdot \pi \cdot (D3 - D2)^4/64$$

The bending rigidity of the optical fiber 211A is obtained using the above Formula 2. In the present embodiment, the Young's modulus E1 of the glass diameter is 80100 N/mm$^2$, the Young's modulus E2 of the primary resin is 0.5 N/mm$^2$, and the Young's modulus E3 of the secondary resin is 1000 N/mm$^2$. The radius D1 of the glass portion is 0.09 mm, the radius D2 of the glass portion covered with the primary resin is 0.11 mm, and the radius D3 of the glass portion covered with the primary resin and the secondary resin is 0.125 mm. At this time, the bending rigidity $EI_{TOTAL}$ of the optical fiber 211A is 0.258 N·mm$^2$. That is, the bending rigidity of the optical fiber 211A is 0.25 N·mm$^2$ or more.

As a comparative example, the bending rigidity of the optical fiber having a glass diameter of 125 $\mu$m is obtained. The Young's modulus E1 of the glass diameter is 80100 N/mm$^2$, the Young's modulus E2 of the primary resin is 0.5 N/mm$^2$, and the Young's modulus E3 of the secondary resin is 1000 N/mm$^2$. The radius D1 of the glass portion is 0.0625 mm, the radius D2 of the glass portion covered with the primary resin is 0.11 mm, and the radius D3 of the glass portion covered with the primary resin and the secondary resin is 0.125 mm. At this time, the bending rigidity of the optical fiber according to the comparative example is 0.060 N·mm$^2$. The bending rigidity of the optical fiber 211A according to the present embodiment is 4.3 times the bending rigidity of the optical fiber having a glass diameter of 125 $\mu$m, which is relatively high.

Next, the tensile strength of the optical fiber cable 2 will be described. In the present embodiment, the tensile strength of the optical fiber cable 2 is the sum of the allowable tension of the plurality of optical fibers 211A to 211L and the allowable tension of the plurality of tensile strength members 24. The allowable tension (N) is obtained according to cross-sectional area (mm$^2$) × Young's modulus (N/mm$^2$) × elongation strain (%).

The radius D1 of the glass portion of the optical fiber 211A is 0.09 mm, and the Young's modulus is 47040 N/mm$^2$. When the optical fiber 211A is elongated by 0.3%, the allowable tension of the optical fiber 211A is 3.59 N. When the optical fiber cable 2 includes 288 optical fibers, the allowable tension of the plurality of optical fibers is 1034 N.

When the radius of one tensile strength member 24 is 0.25 mm, the Young's modulus is 61740 N/mm$^2$, and the tensile strength member 24 is elongated by 0.3%, the allowable tension of the tensile strength member 24 is 36.3 N. Since the optical fiber cable 2 according to the present embodiment includes eight tensile strength members 24, the allowable tension of the plurality of tensile strength members 24 is 291 N. Accordingly, the tensile strength of the optical fiber cable 2 is 1325 N. That is, the tensile strength of the optical fiber cable 2 is 1300 N or more.

As a comparative example, the allowable tension of an optical fiber cable including 288 optical fibers, each having a glass diameter of 125 $\mu$m, and 16 tensile strength members is obtained. In this case, the allowable tension of the plurality of optical fibers is 498 N, and the allowable tension of the plurality of tensile strength members is 582 N. Accordingly, the allowable tension of the optical fiber cable according to the comparative example is 1080 N.

In this way, the tensile strength of the optical fiber cable 2 according to the present embodiment is 1300 N or more, and is the same allowable tension as that of the optical fiber cable according to the comparative example. That is, even when the glass diameter is increased from 125 $\mu$m to 180 $\mu$m and the number of the tensile strength members 24 is reduced from 16 to 8, the same allowable tension as that of the optical fiber cable in the related art is achieved.

As described above, in the optical fiber cable 2 according to the present embodiment, the glass diameters of the optical fibers 211A to 211L are larger than 125 $\mu$m. Therefore, the number of cores per optical fiber can be increased, and the optical fiber cable 2 having a core density of 11 core/mm$^2$ or more can be achieved.

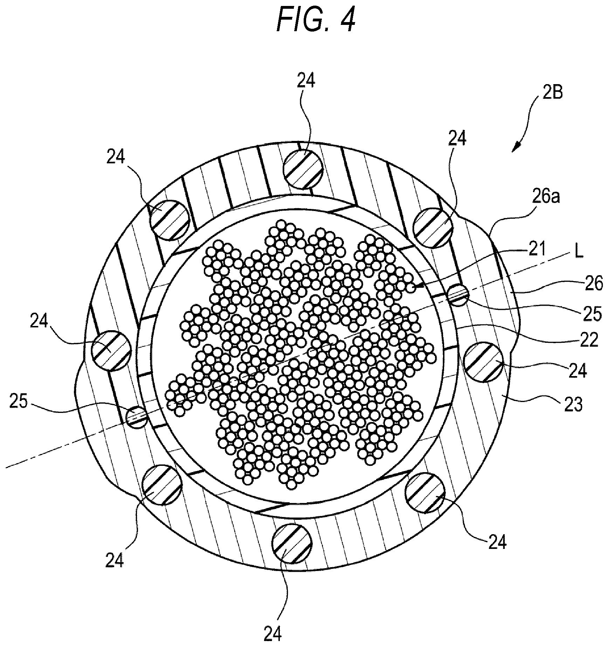

In the present embodiment, the eight tensile strength members 24 form pairs, each pair including two. However, the arrangement of the tensile strength members 24 is not limited thereto. The eight tensile strength members 24 may be provided one by one. FIG. 4 is a cross-sectional view of an optical fiber cable 2B according to a modification. The same components as those of the optical fiber cable 2 are denoted by the same reference signs, and the description thereof is omitted.

As shown in FIG. 4, the plurality of tensile strength members 24 are spaced apart from each other at equal intervals. Specifically, the tensile strength members 24 are provided, one by one, at positions facing each other across the center of the optical fiber cable 2B in the cross section of the optical fiber cable 2B in the radial direction.

In the optical fiber cable 2B according to the modification, the same effects as those of the optical fiber cable 2 can also be attained. Further, in the optical fiber cable 2B, since the plurality of tensile strength members 24 are spaced apart from each other at equal intervals, the non-uniformity in the rigidity of the cable due to the position where the tensile strength members 24 are embedded is reduced. Therefore, it is possible to implement the optical fiber cable 2B that is less likely to be bent during the pneumatic feeding.

Although the present disclosure has been described in detail with reference to the specific embodiment, it is apparent to those skilled in the art that various changes and modifications can be made without departing from the spirit and scope of the present disclosure. In addition, the number, positions, shapes, and the like of the constituent members described above are not limited to those in the above embodiment, and can be changed to the numbers, positions, shapes, and the like suitable for carrying out the present disclosure.

REFERENCE SIGNS LIST

2, 2B: optical fiber cable
21: optical fiber ribbon
22: water absorption tape
23: cable sheath
24: tensile strength member
25: tear string
26: protrusion
26a: surface
211A, 211B, 211C, 211D, 211E, 211F, 211G, 211H, 211I, 211J, 211K, 211L: optical fiber
212: coupling portion
213: non-coupling portion
214: coupling resin
215: core
216: cladding portion
217: inner coating layer
218: outer coating layer
240: tensile strength member set
L: straight line
R1: outer diameter of optical fiber
R2: outer diameter (glass diameter) of cladding portion

**Claims**

1. An optical fiber cable comprising:

   a plurality of optical fibers; and
   a sheath covering the plurality of optical fibers from an outside,
   wherein each of the plurality of optical fibers is a multi-core fiber including a plurality of cores,
   wherein a glass diameter of each of the plurality of optical fibers is larger than 125 $\mu$m, and
   wherein a core density is 11 core/mm$^2$ or more.

2. The optical fiber cable according to claim 1,
   wherein bending rigidity of each of the plurality of optical fibers is 0.25 N·mm$^2$ or more.

3. The optical fiber cable according to claim 1 or 2,
   wherein a tensile strength of the optical fiber cable is 1300 N or more.

4. The optical fiber cable according to any one of claims 1 to 3,
   wherein a glass diameter of each of the plurality of optical fibers is 175 $\mu$m or more and 185 $\mu$m or less.

5. The optical fiber cable according to any one of claims 1 to 4,
   wherein each of the plurality of optical fibers includes 12 cores.

6. The optical fiber cable according to any one of claims 1 to 5,
wherein the plurality of optical fibers are an intermittent coupling type optical fiber ribbon in which, in a state where the plurality of optical fibers are arranged in parallel in a direction orthogonal to a longitudinal direction of the plurality of optical fibers, a coupling portion that has a state where adjacent optical fibers of some or all of the plurality of optical fibers are coupled, and a non-coupling portion that has a state where the adjacent optical fibers are not coupled are intermittently provided in the longitudinal direction.

## FIG. 1

*FIG. 2*

# FIG. 3

# FIG. 4

## INTERNATIONAL SEARCH REPORT

| International application No. |
|---|
| **PCT/JP2022/046393** |

**A. CLASSIFICATION OF SUBJECT MATTER**

*G02B 6/44*(2006.01)i; *G02B 6/02*(2006.01)i
FI:  G02B6/44 366; G02B6/44 371; G02B6/02 461

According to International Patent Classification (IPC) or to both national classification and IPC

**B. FIELDS SEARCHED**

Minimum documentation searched (classification system followed by classification symbols)

G02B6/02-6/10; G02B6/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/256019 A1 (SUMITOMO ELECTRIC INDUSTRIES, LTD.) 24 December 2020 (2020-12-24) | 1-4, 6 |
| | paragraphs [0008], [0026]-[0059], fig. 1, 2 | |
| Y | | 5 |
| Y | JP 2021-012226 A (SUMITOMO ELECTRIC INDUSTRIES, LTD.) 04 February 2021 (2021-02-04) | 5 |
| | paragraphs [0053]-[0056], fig. 4 | |
| Y | WO 2020/217939 A1 (NIPPON TELEGRAPH AND TELEPHONE CORP.) 29 October 2020 (2020-10-29) | 5 |
| | paragraph [0060], fig. 10 | |
| A | WO 2010/001663 A1 (NIPPON TELEGRAPH AND TELEPHONE CORP.) 07 January 2010 (2010-01-07) | 1-6 |
| | entire text, all drawings | |
| A | WO 2018/062365 A1 (FUJIKURA LTD.) 05 April 2018 (2018-04-05) | 1-6 |
| | entire text, all drawings | |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 February 2023** | **07 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/046393** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2019/142841 A1 (SUMITOMO ELECTRIC INDUSTRIES, LTD.) 25 July 2019 (2019-07-25) <br> entire text, all drawings | 1-6 |
| A | WO 2020/095958 A1 (SUMITOMO ELECTRIC INDUSTRIES, LTD.) 14 May 2020 (2020-05-14) <br> entire text, all drawings | 1-6 |
| A | WO 2021/201107 A1 (SUMITOMO ELECTRIC INDUSTRIES, LTD.) 07 October 2021 (2021-10-07) <br> entire text, all drawings | 1-6 |
| A | US 2011/0091171 A1 (DRAKA COMTEQ B. V.) 21 April 2011 (2011-04-21) <br> entire text, all drawings | 1-6 |

Form PCT/ISA/210 (second sheet) (January 2015)

## INTERNATIONAL SEARCH REPORT
### Information on patent family members

| International application No. |
| --- |
| **PCT/JP2022/046393** |

| Patent document cited in search report | | | Publication date (day/month/year) | Patent family member(s) | | | Publication date (day/month/year) |
| --- | --- | --- | --- | --- | --- | --- | --- |
| WO | 2020/256019 | A1 | 24 December 2020 | US | 2022/0365300 | A1 | |
| | | | | paragraphs [0029], [0066]-[0101], fig. 1, 2 | | | |
| | | | | EP | 3988977 | A1 | |
| | | | | JP | 2020-204752 | A | |
| JP | 2021-012226 | A | 04 February 2021 | US | 2021/0003773 | A1 | |
| | | | | paragraphs [0080]-[0083], fig. 4 | | | |
| | | | | EP | 3761088 | A1 | |
| | | | | CN | 112180498 | A | |
| WO | 2020/217939 | A1 | 29 October 2020 | US | 2022/0214496 | A1 | |
| | | | | paragraph [0083], fig. 10 | | | |
| | | | | EP | 3961274 | A1 | |
| | | | | CN | 113711094 | A | |
| | | | | JP | 2020-181106 | A | |
| WO | 2010/001663 | A1 | 07 January 2010 | US | 2011/0110635 | A1 | |
| | | | | entire text, all drawings | | | |
| | | | | CN | 102057309 | A | |
| | | | | JP | 2010-8923 | A | |
| WO | 2018/062365 | A1 | 05 April 2018 | US | 2020/0026013 | A1 | |
| | | | | entire text, all drawings | | | |
| | | | | EP | 3521884 | A1 | |
| | | | | CA | 3038637 | A1 | |
| | | | | KR | 10-2019-0043580 | A | |
| | | | | CN | 109716195 | A | |
| WO | 2019/142841 | A1 | 25 July 2019 | US | 2020/0409005 | A1 | |
| | | | | entire text, all drawings | | | |
| | | | | EP | 3742212 | A1 | |
| WO | 2020/095958 | A1 | 14 May 2020 | US | 2022/0003949 | A1 | |
| | | | | entire text, all drawings | | | |
| | | | | EP | 3879323 | A1 | |
| | | | | CN | 112867952 | A | |
| | | | | JP | 2020-76842 | A | |
| WO | 2021/201107 | A1 | 07 October 2021 | (Family: none) | | | |
| US | 2011/0091171 | A1 | 21 April 2011 | (Family: none) | | | |

Form PCT/ISA/210 (patent family annex) (January 2015)

**EP 4 451 028 A1**

**Patent documents cited in the description**

- JP 2021205002 A

- JP 2015052704 A